# EUROPEAN PATENT APPLICATION

(11) **EP 3 447 245 A1**
(43) Date of publication of application: **27.02.2019**
(21) Application number: 17187338.3
(22) Date of filing: 22.08.2017
(51) Int. Cl.: F01D 5/14

(54) **TURBINE BLADE FOOT**

(71) Applicant: Siemens Aktiengesellschaft, 80333 München (DE)
(72) Inventor: Balandier, Quentin Luc, Lincoln, LN5 7QN (GB)
(74) Representative: Maier, Daniel Oliver

(57) **Abstract**

The present invention concerns a turbine blade foot (1) comprising a shank portion (2) which is adapted to be connected to a turbine blade (4) and a root portion (3) which is adapted to be mounted on a rotor wheel, wherein the shank portion (2) has a first continuous external surface (12) and the root portion (3) has a second continuous external surface (13), wherein inside the turbine blade foot (1) at least one hollow compartment (15) is included which is filled with a lattice structure (20).

## Description

### FIELD OF INVENTION

The present invention relates to a turbine blade foot comprising a shank portion which is adapted to be connected to a turbine blade and a root portion which is adapted to be mounted on a rotor wheel. The present invention also relates to a system of a turbine blade and a turbine blade foot. It also relates to a method of determining the lattice structure in a turbine blade foot.

### BACKGROUND OF INVENTION

The design of turbine components not only requires a very high level of material quality control, but also the understanding of material failure, which during operation of the turbine can lead to the release of debris with very high energy. If the material of the turbine blades or the turbine foot fails, debris of these parts can be released and strike through the housing and other protective shielding with the effect that operating personnel could be injured or even killed.

To avoid these material failure modes, the turbine blades and the turbine foot consist of high strength metal alloys which are carefully cast or metallurgically grown. Extended testing together with material simulations and analysis are conducted to reduce the number of failure incidences. However, experience shows that despite all these precautions, isolated material cracks still can exist on a microscopic scale which during operation of the turbine propagate and grow to an undesirable and dangerous level.

The number of such isolated cracks can increase in turbine components whose metal alloy is not carefully cast or forged, and especially if they are manufactured using additive manufacturing methods. In these methods, the parts can be build layer by layer with the help of metallic powder which is molten by use of laser light. Due to a very localised construction of each layer which experience large temperature gradients during manufacturing, the possibility for the formation of material faults and cracks is increased.

Is a turbine foot manufactured by such additive manufacturing technique extra care has to be exercised to avoid that possible defects grow and propagate. Furthermore, the component design has to ensure that the stress levels are not too high in regions in which such growth and propagation can occur. In particular, crack formation and crack propagation has to be analysed and understood in order to devise a design for a turbine blade foot which can accommodate material faults at a safe operating level.

Therefore, it is a desire to provide a turbine blade foot which can be manufactured by additive manufacturing means, which however is sufficiently safe to operate. In particular, the design of this turbine blade foot has to account for possible material crack growth and propagation. Further, a method to determine the design of such additively manufactured turbine blade foot is required.

### SUMMARY OF INVENTION

To address these problems, the present invention provides for a turbine blade foot comprising a shank portion which is adapted to be connected to a turbine blade and a root portion which is adapted to be mounted on a rotor wheel, wherein the shank portion has a first continuous external surface and the root portion has a second continuous external surface, wherein inside the turbine blade foot at least one hollow compartment is included which is filled with a lattice structure.

These problems are also addressed with a system of turbine blade and turbine blade foot according to the herein provided description, wherein the turbine blade is inseparably connected to the turbine blade foot.

Furthermore, the problems are also addressed by a method of determining the lattice structure in a turbine blade foot according to the herein given description, comprising the following steps:
- determine the geometry of the first continuous external surface of the shank portion comprising a first material and the second continuous external surface of the root portion comprising a second material;
- perform a stress analysis for the turbine blade foot;
- identify the load bearing wall portions according to the stress analysis and define at least one hollow compartment adjacent to the load bearing walls;
- determine a measure for the probability that a material crack grows under given stress conditions in the load bearing wall portion from data related to material purity,
- determine the structure of the lattice structure based on this measure for the probability that a material crack grows;

Here and in the following, the expression turbine blade shall also include turbine vanes, as well as compressor blades and vanes. The expression turbine blade shall have a broad meaning in the context of this document.

Furthermore, an "adaptation to be connected" to a turbine blade is to be interpreted to be suitable to be connected, but the connection does not necessarily have to have taken place. In other words, the shank portion is connectable to a turbine blade. A turbine blade foot which, however, is already connected to a turbine blade, also shall fall under the meaning of this expression.

Typically, the turbine blade is connected to a platform which is part of the shank portion. As this distinction bears no further relevance in the context of this invention, in the following only the shank portion is referred to.

External surfaces are surfaces which are seen from outside when looking at an isolated turbine blade foot. External surfaces are not identical with cooling passages which are adapted to supply the foot and/or the turbine blade with cooling air and run through the inside of the turbine blade foot.

The external surfaces are continuous in the sense that they are continuous over the entire part. Functional openings for e.g. cooling air are excluded and are not part of the continuous surfaces. In particular, no lattice structure is included in the external surfaces, which would otherwise render the external surface open and not continuous.

The first and second external surfaces typically are connected so that one overall, linked up, continuous surface results.

The hollow compartment according to present invention can be closed or partially open (only to the inside), e.g. to guide cooling air.

It also has to be pointed out that a lattice structure can be a regular or an irregular (e.g. sponge like) lattice structure. The lattice structure can in particular be described with the help of the following four parameters: 1.) the geometry of the lattice pattern (e.g. cubic, octet truss, hexagonal, sponge like, etc.), 2.) the limiting surfaces, in particular defining the hollow compartment, 3.) the progressivity (is the lattice pattern and its geometry constant over space or changing?) and 4.) the conformity (whether the lattice has a certain orientation with respect to the limiting surfaces). For further explanations, e.g. see "Design Configurations and Creation of Lattice Structures for Metallic Additive Manufacturing, Abdul Hadi, Frédéric Vignat, Francois Villeneuve; HAL Id: hal-01236568; 1. December 2015;"

The present invention relies on the provision of a lattice structure inside the turbine blade foot. Such structure inside a mechanical part, typically can only be manufactured with the help of additive manufacturing methods. This is in particular true, if the lattice structure connects to all surrounding walls, which is normally the case in present invention. The lattice structure renders the entire turbine blade foot lighter which is also why its use is economically more desirable.

The lattice structure inside the turbine blade foot also allows for redundant failure paths (structural redundancy). E.g. if a load path in the lattice structure fails due to a crack development in one of the elements which make up the lattice structure, one or more other alternative load paths will still exist to carry the operational load. Here, it also has to be noted that the operational load in a turbine blade foot is typically only borne by the material inside the turbine blade foot to a small degree, and to a much larger degree by wall portions making up part of the external surface. Thus, a lower material integrity (with a relatively higher number of material cracks on a microscopic scale) becomes acceptable as cracks in the lattice structure will only lead in the worst case to the failure of a small element in this structure while other parts in the lattice structure can still provide sufficient stability. Would the hollow compartment in the turbine blade foot be filled with solid material, the crack propagation in this material would not be contained to a small area and ultimately the crack will have grown to a hazardous size. As the crack growth could take place inside the turbine blade foot, servicing personnel would not be able to spot this material defect with all further possible consequences to its failure.

Again, present invention allows for a much higher degree of structural redundancy when compared to any conventional design. Current turbine blade foot designs do not allow for any redundant load path. The level of redundancy in present design, however, can be from one redundant load path to many hundreds or even thousands depending on the lattice structure.

In order to determine a suitable lattice structure, stress analysis for the turbine blade foot will have to be performed after its basic geometry has been determined. The stress analysis allows to identify the load bearing wall portions which will have to be manufactured from solid material. The thickness of these wall portions will have to be chosen such that all loads during operation can be sustained by the entire turbine blade foot without deformation or damage. Once the thickness of these wall portions will have been determined, at least one hollow compartment adjacent to the load bearing walls can be defined in which the lattice structure can be incorporated. The lattice structure is typically arranged such that all inside walls are connected to the lattice structure, thus allowing the best mechanical force transmission from the walls into the lattice structure and vice versa.

To find a suitable lattice structure, a probability analysis has to be performed taking into account data for material purity (e.g. material cleanliness data resulting from microscopic examinations). This data allows to give an estimate for the occurrence of any material defect in the load bearing wall portion as well as in the lattice structure itself. The lattice structure can then be determined based on a measure for the probability that material cracks grow during operation of the turbine blade (e.g. crack growth rates resulting from experiments and simulation). The probability analysis allows a forecast of the probability of having a material defect in e.g. a high stressed area during operation and material failure during operation. Such probability can be identical with a component or system probabilistic life time, which is the expected time before a risk for material failure occurs. This life time could be calculated for different known lattice structures. The lattice structures can vary in the parameters describing the lattice structure (see above) and the comparison in lifetime allows to identify the best possible expected life time design, i.e. lattice structure.

Typically, the stress analysis is conducted under operating conditions, i.e. calculating, simulating or measuring the stress under operation conditions. The above method to determine the lattice structure in a turbine blade foot also may be applied to determine a lattice structure introduced into a turbine blade or into a system of turbine blade and turbine foot.

The stress analysis typically provides an elastic stress gradient in the turbine blade foot. The root stresses predominantly are due to the blade centrifugal load during operation. Pressure loads, thermal loads, vibratory loads typically also have a secondary contribution to the root stresses. From these parameters a wall thickness for the load bearing wall portions can be estimated which typically is of solid material (not lattice structure).

Another aspect of the present invention is that at least one cooling channel with a continuous cooling channel wall is included inside the turbine blade foot, wherein the cooling channel wall does not include the lattice structure. Typically, the at least one cooling channel runs through the root portion and the shank portion in order to provide cooling air to the turbine blade which is connected to the shank portion.

According to this aspect, the at least one cooling channel has walls which are separate from the lattice structure. In other words, it has a continuous cooling channel wall. In particular, over the entire extension of the cooling channel inside the root portion and the shank portion, the cooling channel wall is continuous. This allows for the most efficient transport of cooling air without significant flow disturbance by e.g. the lattice structure. It reduces the flow resistance and thus reduces the required pressure differential to drive the cooling air flow.

In another embodiment the at least one hollow compartment is only arranged inside the root portion and not in the shank portion. The shank portion is preferably solid. Preferably, the hollow compartment according to this embodiment is closed. Consequently, the heaviest part of the turbine blade foot can be reduced in weight, while the shank portion still maintains sufficient material for a very solid and lasting connection with the turbine blade. This connection can e.g. be realized by welding or printing.

In another aspect, the second continuous external surface of the root portion includes surfaces of load bearing wall portions which are located adjacent to the at least one hollow compartment and have a thickness of at least 1.5 mm. The wall thickness is measured perpendicularly to the surface of the respective wall. The maximum thickness of the load bearing wall depends on the actual size and geometry of the turbine blade foot. The minimum thickness for the load bearing wall portions results from analysis and experience. They allow for a weight efficient design while at the same time all known loads can be sustained safely.

According to another embodiment of the invention, the volume density of the lattice structure has a gradient from the first continuous external surface towards the centre of gravity of the shank portion. The centre of gravity might e.g. be located in an area in which the lattice is realized as a irregular sponge like 3 dimensional pattern. A change in volume density can result from a change e.g. in the volume of individual lattice elements or from a change in e.g. lattice geometry. This variable lattice structure allows for a flexible and load adjusted design which can lead to a significant weight reduction.

Further, the volume density of the lattice structure can have a gradient from the second continuous external surface towards the centre of gravity of the root portion, in particular towards the cooling channels. The centre of gravity might be located in an area in which the lattice is realized to be an irregular sponge like pattern. A change in volume density can result from a change e.g. in the volume of individual lattice elements or from a change in e.g. lattice geometry. This variable lattice structure allows for a flexible and load adjusted design which can lead to a significant weight reduction.

In another embodiment, the lattice structure inside the at least one hollow compartment is conforming to the first continuous external surface and/or the second continuous external surface. In other words, the lattice structure has an orientation in accordance to the continuous external surfaces and allows the creation of a particularly stable compound in which the external forces are distributed very efficiently inside. Alternatively, the lattice structure inside the at least one hollow compartment is conforming to the surfaces inside the turbine blade foot which lie opposite to the first continuous external surface and/or the second continuous external surface.

Furthermore, the lattice structure inside the at least one hollow compartment has a geometry which is made up of elongated lattice elements which are joint at an average angle between neighbouring elements which is larger than 90° and smaller than 180° at their joint (the angel is calculated between the average longitudinal extension of these elongated lattice elements). In particular, the geometry is at least partially tetrahedral. These geometries allow for a suitable distribution of loads in the lattice structure and in particular the formation of redundant load paths if one lattice element should be broken.

According to one other aspect of this invention the material of the root portion and/or the shank portion is identical to the material of the lattice structure and they are formed as one solid unit. This allows the manufacture of the entire structure in one manufacturing process. This is efficient and cost effective.

According to one embodiment of the inventive method, the determination of the lattice structure also takes into account the weight, mass or density of the lattice structure filling the at least one hollow compartment. The parameters to describe the lattice structure can be varied in order to obtain a design which not only fulfils the required load bearing abilities, but also fulfils further requirements like weight reduction or weight balancing.

Further, the determination of the lattice structure also takes into account the likelihood of a crack existing within the lattice structure and/or a lattice elements which form the lattice structure. The determination of the lattice structure not only takes into account the possible crack growth, but the possibility of a crack already existing right from the outset (material cleanliness). According to this, the lattice design already might have to assume that certain elements in the lattice structure are not load bearing. These elements could then be treated like they were not at all existing in the lattice structure, or in other words, the effective lattice structure might not include all lattice elements in further analysis. Typically, said faulty lattice elements would be distributed randomly in the lattice structure.

Furthermore, the determination of the lattice structure can also take into account the number of single lattice elements per given volume or surface area of the hollow compartment which forms the lattice structure. Instead of treating the lattice structure numerically in its entirety, one might for in an estimated calculation also assume a number of basic parameters and e.g. only vary the number of lattice elements in a given volume. As the number of lattice elements is an estimate for the stability of the structure under load, one might simply compare different lattice structure geometries which are scaled so that the overall number of lattice structure elements varies.

Further, the inventive method further comprises the step of determining the thickness of the load bearing wall portions depending on the results of the stress analysis. The thickness of the load bearing walls allows defining the at least one hollow compartment adjacent to the load bearing walls. The compartment size, however, in subsequent calculations might not further be modified, thus simplifying the overall probability analysis.

### BRIEF DESCRIPTION OF THE DRAWINGS

The above mentioned attributes and other features and advantages of this invention and the manner of attaining them will become more apparent and the invention itself will be better understood by reference to the following description of embodiments of the invention taken in conjunction with the accompanying drawings, wherein
FIG. 1 shows a 3-dimensional side view of a turbine blade foot 1 with connected turbine blade 4 according to a state of the art design;
FIG. 2 shows a partially open 3-dimensional side view of a turbine blade foot 1 with connected turbine blade 4 according to an embodiment of present invention;
FIG. 3 shows a picture of a lattice structure manufactured with additive manufacturing which is also suitable to fill the hollow compartment of one embodiments of the inventive turbine blade foot.
FIG. 4 shows a schematic 3-dimensional side view of a root portion 3 of a turbine blade foot 1 as analyzed to determine the lattice structure according to an embodiment of the inventive method;
FIG. 5 shows a diagram of the elastic stress gradients over the thickness of load bearing walls, as e.g. indicated in the depiction of the root portion 3 in figure 4.
FIG. 6 shows a schematic 3-dimensional side view of a root portion 3 with a lattice structure gradient indicated by arrows according to an aspect of an embodiment of present invention;
FIG. 7 shows a microscopic optical analysis of a cross section through a metallic rod manufactured with additive manufacturing methods displaying the difference between an intact cross sectional area (left picture) and one in which a crack already has formed (right picture).
FIG. 8 shows a flow diagram of one embodiment of the inventive method for determining the lattice structure 20 in a turbine blade foot 1.

### DETAILED DESCRIPTION OF INVENTION

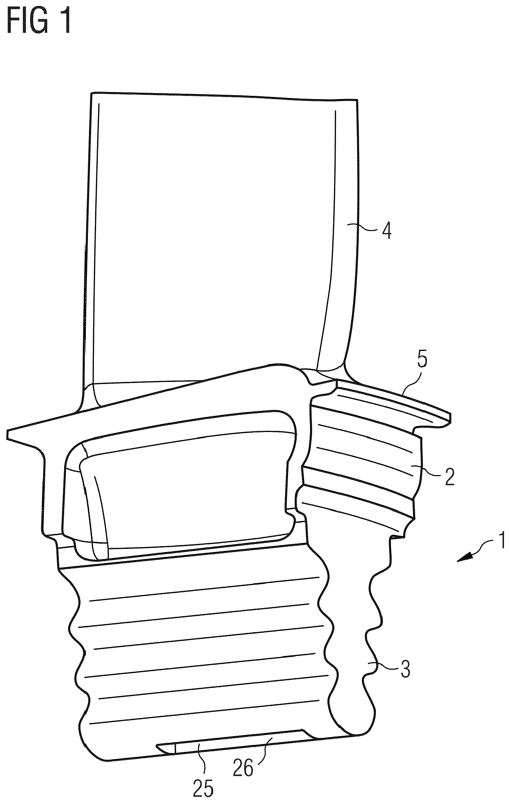

**Figure 1** shows a 3-dimensional side view of a turbine blade foot 1 with connected turbine blade 4 according to a state of the art design. The turbine blade foot 1 consists of the turbine blade root portion 3 which is inserted into a suitably shaped rotor wheel portion to hold it in place during operation of the turbine. Connected to the root portion 3 is the turbine blade shank portion 2 which connects at a platform 5 to the turbine blade 4. The platform 5 is part of the shank portion 2 and serves to separate the central working gas channel in the turbine from the turbine blade foot section, in which e.g. cooling air is held available and channelled to the sections where it is needed. The turbine blade 4 is supplied with cooling air through the cooling channel 25 at the lower end of the root portion 3. The cooling channel 25 has a continuous cooling channel wall 26 which guides the cooling air. The cooling channel 25 leads through the turbine blade foot 1 into the turbine blade 4 and from there typically into the central working gas channel through small openings in the turbine blade 4.

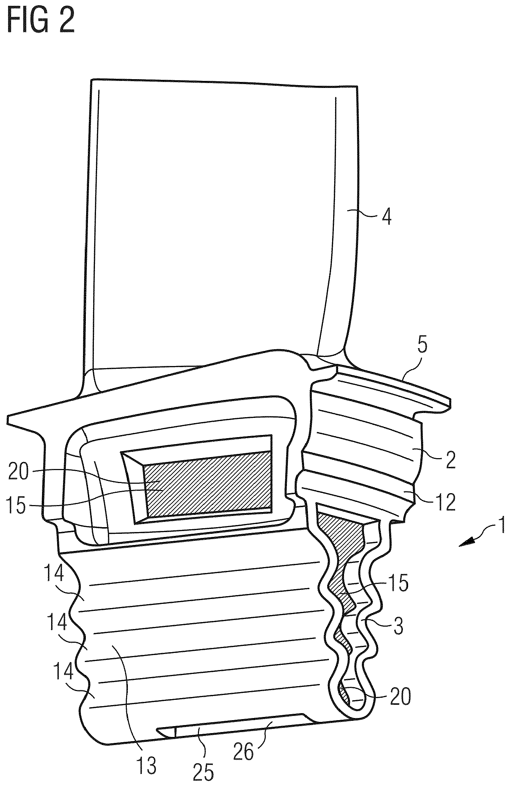

**Figure 2** shows a partially opened up (only for reasons of depiction), 3-dimensional side view of a turbine blade foot 1 with connected turbine blade 4 according to an embodiment of present invention. The outer geometry of the turbine blade foot 1 is identical to the turbine blade foot 1 in figure 1. However, inside the turbine blade foot 1 a hollow compartment 15 is arranged which is filled with a lattice structure 20 made of metal alloy. Preferably, the metal alloy is identical to the one from which the turbine blade foot 1 is formed. The lattice structure 20 is covered in the shank portion 2 with walls that form a first continuous external surface 12. The lattice structure 20 in the root portion 3 is also covered with walls that form a second continuous external surface 13. Some parts of these external surfaces 12 and 13 are removed in figure 2 for a clearer depiction of the lattice structure 20 in the hollow compartment 15. Normally, however, these opened up wall parts are closed and are covered by continuous external surface 12 and the second continuous external surface 13 which define the outside geometry of the turbine blade foot 1.

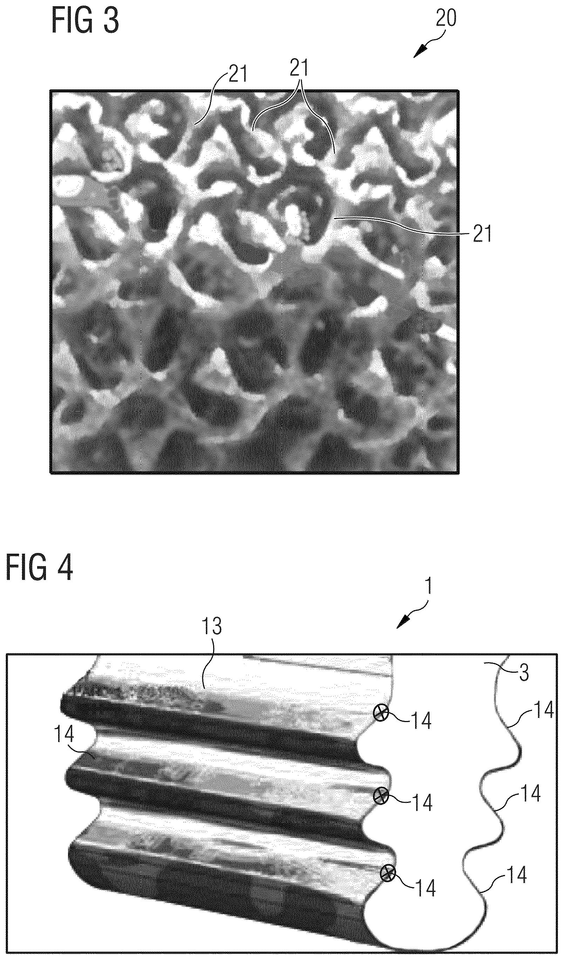

**Figure 3** shows a picture of a lattice structure 20 manufactured with an additive manufacturing method which is suitable to fill a hollow compartment 15 of one embodiment of the inventive turbine blade foot 1, e.g. that shown in figure 2. The lattice structure 20 is made up of elongated lattice elements 21, which are joined together at their ends. The average angle between two neighbouring lattice elements 21 typically lies between 90 and 180°. The overall lattice structure is able to support a force or a load which is applied to the lattice structure. This force or load is distributed over a number of lattice elements 21 over a larger volume. Is, e.g. the lattice structure arranged to fill the entire hollow compartment 15, the load or the force also can also be directed onto other wall sections of the turbine blade foot 1.

In case that one lattice element 21 breaks due to material failure, the load or the force acting on the entire lattice structure 20 is redistributed over the entire lattice structure, while the entire lattice structure 20 remains intact. In particular, no further breaks result from the local failure in other lattice elements 21 and the local failure does not propagate as would be the case if the volume was filled with solid metallic alloy. Thus, the consequences of the material failure can be contained to a small local area.

**Figure 4** shows a schematic 3-dimensional side view of a root portion 3 of a turbine blade foot 1 as analyzed to determine the lattice structure according to an embodiment of the inventive method. The analysis results from a numerical simulation of the elastic stress gradients in the root portion 3. The analysis shows that the root portion has several upward facing (orientation according to the depiction in the figure) load bearing wall portions 14, which support most of the load during operation of the turbine. In consequence, the elastic stress gradients in these areas are highest, which is indicated by the lightly coloured streaks.

The analysis shows further that the root stresses are predominantly due to the centrifugal load of the turbine blade foot 1 together with the turbine blade 4. Pressure loads, thermal loads, vibratory loads also have a secondary contribution to the root stresses. Is the weight of these components reduced, e.g. due to the provision of a lattice structure inside, the stresses consequently are also reduced. This reduces the required thickness of the load bearing wall portions 14 further, over which most of the load stress is sustained.

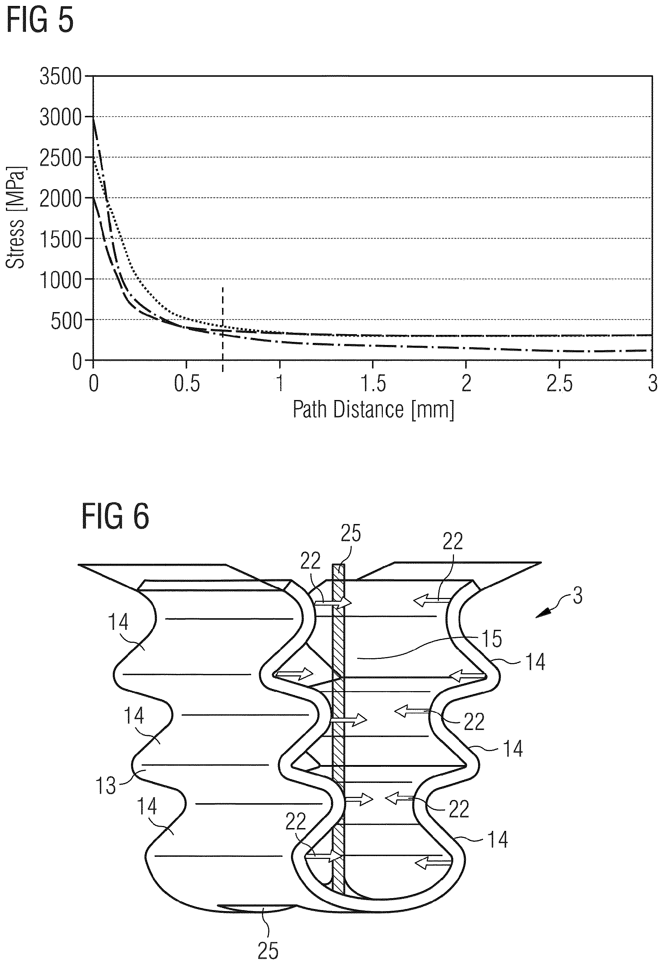

**Figure 5** shows a diagram of the elastic stress gradients over the thickness of the load bearing walls 14 sustained in the root portion 3 of the embodiment in figure 4. The three graphs shown depict the stress values in three different locations of the load bearing wall portions 14, indicated by a cross and a circle in figure 3. The stress values reflect the stress over just a small distance (thickness) into the load bearing wall portions 14 perpendicularly from the second continuous external surface 13 into the solid material of the load bearing wall portions 14. The analysis shows that the elastic stress levels are much lower than the material proof strength at depths of larger than about 0.7mm. It also shows that most of the stress load is sustained over only a small thickness of the load bearing wall portions 14. This observation also builds the rationale behind present invention in which from a certain depth level onwards the solid material can be replaced by a lattice structure 20 (not shown).

**Figure 6** shows a schematic 3-dimensional side view of a root portion 3 with a lattice structure gradient 22 indicated by arrows according to an aspect of an embodiment of present invention. Typically, the lattice structure gradient 22 concerns the volume density of the lattice structure 20, however, it might also concern a gradient in any of the parameters suitable to describe the lattice structure 20 (see above). Thus, it is essential that the lattice structure 20 is not unvariable over distance starting from the inside wall opposite the second continuous external surface 13 along the extension of the arrows. In particular, the lattice structure gradient 22 extends from the load bearing wall portion 14 towards the cooling channel(s) 25 inside the root portion 3. In particular, the lattice structure gradient 22 is symmetric relative to a plane which coincides with the centre line of the cooling channel(s) 25 (not shown in figure 6). This plane is preferably realized in solid material forming a control surface for lattice structure support.

Before the lattice structure 20 can be determined, the hollow compartment 15 inside the turbine blade root portion 3 will have to be defined. This could be done by identifying a sufficiently large shell thickness, comparable to the load bearing wall thickness, in order to sustain the stresses acting on the material alloy. Once the wall thickness has been identified, a shell with a constant wall thickness over the entire root portion 3 can be assumed, thus defining the size and geometry of the hollow compartment 15.

According to one embodiment of the invention, starting from the load bearing wall portions 14, the density of the lattice structure 20 can be progressively reduced, in particular in line with the stress gradients. This will optimise the strength and the weight of the turbine blade root portion 3. Thus, the extension of the arrows indicate a reduction of the volume density of the lattice structure 20.

According to one specific embodiment, the root portion 3 could also include an external shell with the load bearing wall portions 14, then the lattice structure 20 inside, then a stochastic lattice structure 20 (foam structure) in the middle of the root portion 3.

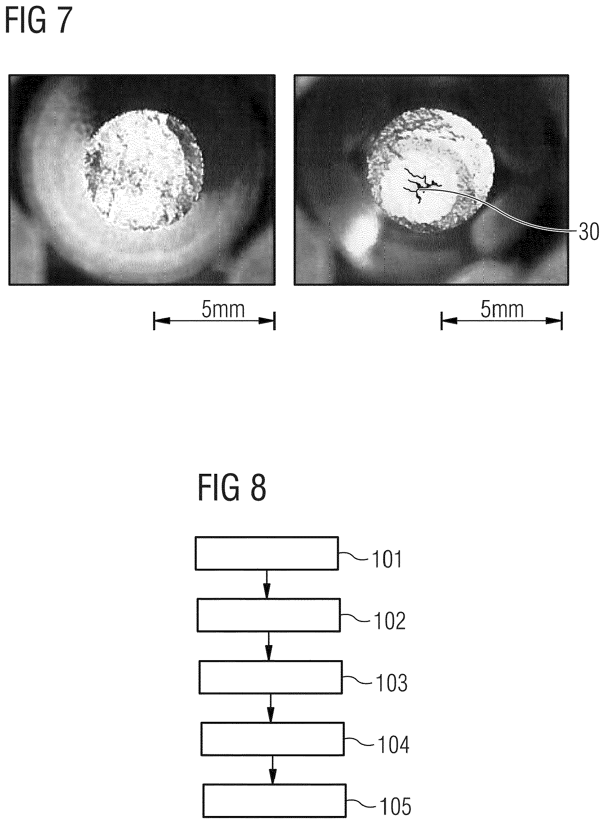

**Figure 7** shows the cross sections of a metallic rod manufactured with additive manufacturing methods analyzes with a microscopic, optical method, displaying the difference between an intact cross sectional area (left picture) and one in which a crack 30 already has formed (right picture).

The optical analysis builds the basis for the probability that a material crack 30 exists in a certain volume of similar material, which also grows under given stress conditions (if the basic material behaviour is known under stress). Data related to material purity allows to judge how many cracks in a certain structure have to be expected and when and where material failure might occur. This, again allows to determine a suitable structure of the lattice structure 20 based on a measure for the probability that a material crack grows under given conditions.

**Figure 8** shows a flow diagram of one embodiment of the inventive method for determining the lattice structure 20 in a turbine blade foot 1. The method includes the following steps:
- determine the geometry of the first continuous external surface 12 of the shank portion 2 comprising a first material and the second continuous external surface 13 of the root portion 3 comprising a second material (first method step 101);
- perform a stress analysis for the turbine blade foot 1 (second method step 102);
- identify the load bearing wall portions 14 according to the stress analysis and define at least one hollow compartment 15 adjacent to the load bearing walls 14 (third method step 103);
- determine a measure for the probability that a material crack grows under given stress conditions in the load bearing wall portion 14 from data related to material purity (fourth method step 104),
- determine the structure of the lattice structure 20 based on this measure for the probability that a material crack grows (fifth method step 105);

## Claims

1. A turbine blade foot (1) comprising a shank portion (2) which is adapted to be connected to a turbine blade (4) and a root portion (3) which is adapted to be mounted on a rotor wheel, wherein the shank portion (2) has a first continuous external surface (12) and the root portion (3) has a second continuous external surface (13),
**characterized in that**
inside the turbine blade foot (1) at least one hollow compartment (15) is included which is filled with a lattice structure (20).

2. A turbine blade foot according to claim 1,
**characterized in that**
at least one cooling channel (25) with a continuous cooling channel wall (26) is included inside the turbine blade foot (1), wherein the cooling channel wall (26) does not include the lattice structure (20).

3. A turbine blade foot according to any of the preceding claims,
**characterized in that**
the at least one hollow compartment (15) is only arranged inside the root portion (3) and not in the shank portion (2).

4. A turbine blade foot according to any of the preceding claims,
**characterized in that**
the second continuous external surface (13) of the root portion (3) includes surfaces of load bearing wall portions (14) which are located adjacent to the at least one hollow compartment (15) and have a thickness of at least 1.5 mm.

5. A turbine blade foot according to any of the preceding claims,
**characterized in that**
the volume density of the lattice structure (20) has a grandient from the first continuous external surface (12) towards the centre of gravity of the shank portion (2).

6. A turbine blade foot according to any of the preceding claims,
**characterized in that**
the volume density of the lattice structure (20) has a grandient from the second continuous external surface (13) towards the centre of gravity of the root portion (2), in particular towards the cooling channels (25).

7. A turbine blade foot according to any of the preceding claims,
**characterized in that**
the lattice structure (20) inside the at least one hollow compartment (15) is conforming to the first continuous external surface (12) and/or the second continuous external surface (13).

8. A turbine blade foot according to any of the preceding claims,
**characterized in that**
the lattice structure (20) inside the at least one hollow compartment (15) has a geometry which is made up of elongated lattice elements (21) which are joint at an average angle between neighbouring elements (21) which is larger than 90° and smaller than 180° at their joint.

9. A turbine blade foot according to any of the preceding claims,
**characterized in that**
the material of the root portion (3) and/or the shank portion (2) is identical to the material of the lattice structure (20) and they are formed as one solid unit.

10. A system of turbine blade (4) and turbine blade foot (1) according to one of the previous claims, wherein the turbine blade (4) is inseparably connected to the turbine blade foot (1).

11. A method of determining the lattice structure (20) in a turbine blade foot (1) according to one of the previous claims 1 to 9, comprising the following steps:
- determine the geometry of the first continuous external surface (12) of the shank portion (2) comprising a first material and the second continuous external surface (13) of the root portion (3) comprising a second material;
- perform a stress analysis for the turbine blade foot (1);
- identify the load bearing wall portions (14) according to the stress analysis and define at least one hollow compartment (15) adjacent to the load bearing walls (14);
- determine a measure for the probability that a material crack grows under given stress conditions in the load bearing wall portion (14) from data related to material purity,
- determine the structure of the lattice structure (20) based on this measure for the probability that a material crack grows;

12. A method according to claim 11,
**characterized in that**
the determination of the lattice structure (20) also takes into account the weight, mass or density of the lattice structure (20) filling the at least one hollow compartment (15).

13. A method according to one of the preceding claims 11 or 12,
**characterized in that**
the determination of the lattice structure (20) also takes into account the likelihood of a crack existing within the lattice structure (20) and/or a lattice elements (21) which form the lattice structure (20).

14. A method according to one of the preceding claims 11 to 13,
**characterized in that**
the determination of the lattice structure (20) also takes into account the number of single lattice elements (21) per given volume or surface area which forms the lattice structure (20).

15. A method according to one of the preceding claims 11 to 14,
**characterized in that**
it further comprises the step of determining the thickness of the load bearing wall portions (14) depending on the results of the stress analysis.
